# EUROPÄISCHE PATENTSCHRIFT

(11) **EP 2 485 020 B1**
(45) Veröffentlichungstag und Bekanntmachung des Hinweises auf die Patenterteilung: **17.05.2017**
(21) Anmeldenummer: 11009904.1
(22) Anmeldetag: 16.12.2011
(51) Int. Cl.: G01F 1/84

(54) **Coriolis-Massedurchflussmessgerät**
Coriolis mass flow measuring device
Débitmètre massique Coriolis

(30) Priorität: 02.02.2011 DE 102011010178
(43) Veröffentlichungstag der Anmeldung: 08.08.2012
(73) Patentinhaber: Krohne AG, 4019 Basel (CH)
(72) Erfinder: Hussain, Yousif, Dr., Northampton NN 3 3 DA (GB); Wang, Tao, Dr., Canterbury Kent, CT2 9DG (GB)
(74) Vertreter: Gesthuysen Patent- und Rechtsanwälte

(56) Entgegenhaltungen:
- EP-A2- 1 319 930
- WO-A1-2008/111983
- WO-A2-96/08697
- DE-A1-102004 035 971
- DE-A1-102009 001 472
- US-A- 5 969 264

## Beschreibung

Die Erfindung betrifft ein Coriolis-Massedurchflussmessgerät mit mindestens vier gebogenen Messrohren, mindestens einer Aktuatoranordnung, und mindestens einer Sensoranordnung, wobei ein erstes Messrohr und ein zweites Messrohr in einer gemeinsamen ersten Ebene und ein drittes Messrohr und ein viertes Messrohr in einer gemeinsamen zweiten Ebene liegen, wobei die erste Ebene und die zweite Ebene parallel zueinander verlaufen, und wobei alle vier Messrohre einlaufseitig und auslaufseitig mit einem Sammler strömungstechnisch zusammengefasst sind.

Nach dem Coriolis-Prinzip arbeitende Massedurchflussmessgeräte sind grundsätzlich seit vielen Jahren bekannt, sie erlauben die Bestimmung des Massedurchsatzes des durch das Messrohr strömenden Mediums mit hoher Genauigkeit. Zur Ermittlung des Massedurchsatzes wird das Messrohr mit einem Schwingungserzeuger oder auch mit mehreren Schwingungserzeugern zu Schwingungen - insbesondere mit der Eigenfrequenz einer bestimmten Eigenform einer Schwingung - angeregt, und die tatsächlich resultierenden Schwingungen werden mit Schwingungsaufnehmern erfasst und ausgewertet. Der Schwingungserzeuger und die Schwingungsaufnehmer sind im Allgemeinen derart aufgebaut, dass sie einen Permanentmagneten sowie eine Magnetspule aufweisen, um auf elektrischem Wege Schwingungen auf das Messrohr zu übertragen bzw. Schwingungen des Messrohrs zu erfassen.

Die Auswertung besteht beispielsweise darin, dass die Phasenverschiebung zwischen den von zwei Schwingungsaufnehmern jeweils erfassten Schwingungen ermittelt wird, wobei diese Phasenverschiebung ein direktes Maß für den Massedurchsatz ist. Es sind Coriolis-Massedurchflussmessgeräte bekannt, die ein einziges Mcssrohr aufweisen, wie auch solche, die genau zwei Messrohre aufweisen, wobei die Messrohre entweder im Wesentlichen gerade erstreckt oder gekrümmt sind.

Die Messrohre der Massedurchflussmessgeräte haben in Abhängigkeit von der Menge der zu transportierenden Massen ganz unterschiedliche Nennweiten mit unterschiedlichen Wandstärken. Die Messrohre müssen insgesamt so ausgelegt werden, dass sie den erforderlichen Drücken und auftretenden mechanischen Spannungen standhalten können, dass sie mit vertretbarem Energieaufwand zu gut erfassbaren Schwingungen anregbar sind und die Eigenfrequenzen des durchströmten Messrohrs in einem gewünschten Bereich liegen.

Die DE 10 2004 035 971 A1 offenbart ein Coriolis-Massedurchflussmessgerät mit vier gebogenen Messrohren, wobei die Messrohre jeweils paarweise im Gleichstrom oder im Gegenstrom mit einem Fluid beaufschlagbar sind, dessen Massedurchfluss bestimmt werden soll. Die vier Messrohre sind wahlweise, in Einheiten von zwei Messrohren, nebeneinander oder übereinander angeordnet und gemeinsam zu gegenläufigen Schwingungen anregbar. Jeweils an einem Messrohrpaar sind Teile einer Aktuator- und Sensoranordnung befestigt, so dass die Messrohre zu Schwingungen anregbar und die angeregten Schwingungen mit den Sensoranordnungen erfassbar sind. Die Anordnung, bei der die Messrohre paarweise übereinander angeordnet sind, ist das untere Messrohr jeweils etwas größer Ausgestaltet, um die längere Strecke zwischen Einlauf und Auslauf zu überstreichen. Die DE 2009 001 472 A+ offenbart ein Coriolis-Massedurchflussmessgerät mit vier geraden Messrohren, wobei alle vier Messrohre einlaufseitig uns auslaufseitig mit einem Sammler strömungstechnisch zusammegefasst sind und wobei die Geometrie der Messrohre so gewählt ist, dass sie vier strömungstechnisch parallel geschaltete Strömungpfade bildet. Ausgehend vom vorgenannten Stand der Technik liegt der Erfindung die Aufgabe zugrunde, ein Coriolis-Massedurchflussmessgerät für große Durchflussmengen anzugeben, das bezüglich seiner Messgenauigkeit verbessert ist.

Die vorgenannte Aufgabe ist bei einem gattungsgemäßen Coriolis-Masse-durchflussmessgerät dadurch gelöst, dass die Geometrie und/oder die Oberflächeneigenschaften der Messrohre so gewählt sind, dass der Rohrwiderstand aller vier Messrohre für eine Strömung identisch ist. Die Aufgabe wird durch die Merkmale von Anspruch 1 gelöst. Die vier Messrohre des Coriolis-Massedurchflussmessgeräts sind vorzugsweise U- oder V-förmig gebogen und erstrecken sich zwischen den auf beiden Seiten angeordneten Sammlern. Der horizontale Abstand zwischen den beiden Sammlern ist für alle Messrohre gleich lang. Die Messrohre, die in einer gemeinsamen, vorzugsweise vertikalen, Ebene liegen, sind folglich übereinander angeordnet. Vorzugsweise ist der Abstand zwischen Messrohren über die gesamte Strecke zwischen den Sammlern konstant, so dass die Messrohre parallel zueinander Verlaufen und insbesondere auch die Mittellinien der beiden übereinander angeordneten Messrohre einen konstanten Abstand zueinander haben.

Dass jeweils zwei Messrohre in einer Ebene liegen, nämlich das erste Messrohr und das zweite Messrohr bzw. das dritte Messrohr und das vierte Messrohr bedeutet, dass jeweils die beiden Messrohre als Messrohrpaar übereinander angeordnet sind, nämlich vorteilhaft so, dass das eine Messrohrpaar im Betrieb des Coriolis-Massedurchflussmessgeräts gegenläufig zu dem zweiten Messrohrpaar schwingen kann und Messwerte erfassbar sind. Bei einer Ausgestaltung, bei der die in einer Ebene liegenden Messrohre einen gleichen Durchmesser aufweisen, liegen vorzugsweise sogar die beiden Mittellinien der Messrohre in einer gemeinsamen Ebene. Denkbar ist das jedoch auch für Messrohre, die keinen gleichen Durchmesser aufweisen. Insbesondere bei Ausgestaltungen mit unterschiedlichen Durchmessern liegen beispielsweise die Außenumfänge auf einer Seite - vorzugsweise auf der zu dem zweiten Messrohrpaar gewandten Seite - der Messrohre in einer Ebene, so dass der Spalt - der Schwingungsspalt - zwischen den Messrohrpaaren für alle Messrohre konstant ist.

Die Öffnungen der vier Messrohre enden beidseitig in einem Sammler, der die Messrohre strömungstechnisch zusammenfasst. Durch die gemeinsamen Sammler an den beiden Enden der Messrohre ist für alle Messrohre der Druck am Eintritt identisch und auch für alle Messrohre der Druck am Austritt identisch. Die jeweilige Druckdifferenz zwischen Eintrittsdruck und Austrittsdruck ist im Betrieb von einer Vielzahl von Parametern des Fluids und des Coriolis-Massedurchflussmessgeräts, insbesondere der Messrohre, abhängig.

Die Geometrie der Messrohre ist erfindungsgemäß so gewählt, dass vorzugsweise im optimalen Betriebspunkt des jeweiligen Coriolis-Massedurchflussmessgeräts der strömungstechnische Rohrwiderstand aller vier Messrohre für die Strömung identisch ist. Dies bedeutet insbesondere, dass sich in allen vier Messrohren im optimalen Betriebspunkt ein gleicher Volumenstrom einstellt. Mit optimalem Betriebspunkt ist dabei der Betriebspunkt oder die Betriebsparameter gemeint, für das das Coriolis-Massedurchflussmessgerät geeignet und ausgelegt ist.

Neben dem Einfluss durch die Eigenschaften des innerhalb einer Rohrleitung fließenden Fluides - die aufgrund der Sammler für alle Messrohre gleich sind - wird die Strömung eines Fluides innerhalb einer Rohrleitung maßgeblich durch die Oberflächeneigenschaften der Rohrleitung selbst und die Geometrie der Rohrleitung, insbesondere der Durchmesser, die Länge und die Anzahl und der Biegeradius von innerhalb der Rohrleitung vorgesehenen Bögen, beeinflusst Erfindungsgemäß sind folglich alle vier Messrohre des Coriolis-Massedurchflussmessgeräts so ausgelegt, dass jedes Messrohr der Strömung einen im Wesentlichen identischen Widerstand entgegensetzt, so dass sich - insbesondere bei einem durch die Sammler vorgegebenen Druckverlust - stets ein gleicher Volumenstrom in allen vier Rohrleitungen einstellt.

Bezüglich der Geometrie der Messrohre lässt sich dazu beispielsweise die Gesamtlänge, der Durchmesser oder die Anzahl und der Verlauf der Bögen der Rohrleitungen, vorzugsweise auch unter Berücksichtigung der Fluideigenschaften im Betriebspunkt oder Betriebsfenster des Coriolis-Massedurch-flussmessgeräts - anpassen. Bezüglich der Oberflächeneigenschaften der Messrohre ist insbesondere die Oberflächenrauheit der Messrohre auf der mit der Strömung in Berührung kommenden Innenfläche von Bedeutung. Die, beispielsweise durch unterschiedliche Längen der gebogenen Messrohre hervorgerufenen, unterschiedlichen Rohrwiderstände für die Strömung durch gezielte Auswahl und Anpassung anderer Parameter, wie z. B. Durchmesser und Oberflächengüte, ausgeglichen, so dass der für alle Messrohre ein gleicher Rohrwiderstand vorherrscht, wie dies beispielsweise bei Coriolis-Massedurchflussmessgeräten mit vier geraden - identischen - Messrohren der Fall ist.

Als besonders vorteilhaft hat sich eine erste Ausgestaltung des Coriolis-Massedurchflussmessgeräts herausgestellt, bei der die in einer gemeinsamen Ebene liegenden Messrohre so ausgestaltet sind, dass sie gleich lang sind. Die Gesamtlänge aller vier Messrohre, also die von der Mittellinie eines Messrohres überstrichene Strecke, ist folglich bei dieser Ausgestaltung identisch. Eine identische Länge der Messrohre kann beispielsweise dadurch erreicht werden, dass die Länge eines oder mehrerer Messrohre gezielt länger gewählt wird, als es für eine Verbindung zwischen den Sammlern erforderlich wäre, also beispielsweise verlängert wird. Dies hat, je nach Ausgestaltung, insbesondere Wahl der Anzahl und Radien der Bögen, die Konsequenz, dass die in einer Ebene liegenden Messrohre nicht mehr zwangsläufig über die gesamte Strecke zwischen den Sammlern parallel verlaufen, sondern auch variierende Abstände aufweisen können.

Ganz besonders vorteilhaft lässt sich die Länge der Messrohre beeinflussen und gleichlang gestalten, indem die Biegeradien der Messrohre, die in einer gemeinsamen Ebene liegen, sich derart wechselweise ergänzen, dass die Länge der Messrohre identisch ist. "Wechselweise ergänzen" bedeutet dabei, dass die Summe der Strecken, die mit einem bestimmten Radius überstrichen werden auf die Gesamtlänge der beiden in einer Ebene verlaufenden Messrohre gesehen, für beide Messrohre gleich sind. Die durch die verschiedenen Biegeradien unterschiedlichen Längen einzelner Strecken der Messrohre gleichen sich dadurch derart aus, dass die beiden Messrohre, die jeweils in einer gemeinsamen Ebene liegen, vollständig parallel mit einem konstanten Abstand zueinander verlaufen, während die Länge der Messrohre und insbesondere die Länge der Mittellinien der Messrohre vollständig identisch ist. Diese Ausgestaltung weist den Vorteil auf, dass -bei gleichem Durchmesser der Messrohre - und durch die Biegeradien konstruierter gleicher Länge, jedes Messrohr der Strömung den gleichen Rohrwiderstand entgegensetzt. Die Biegeradien entsprechen sich vorzugsweise auch derart, dass der Biegeradius des strömungstechnisch weiter außen laufenden Messrohrs, d.h. das Messrohr, das eine längere Strecke zu überbrücken hat dem Biegeradius des innen verlaufenden Messrohres mit zusätzlich addiertem Abstandswert zwischen den Messrohren und addiertem Rohrradius entspricht. Bei einem Beispiel, das nicht Teil der Erfindung ist, lässt sich ein identischer Rohrwiderstand auch erzeugen, bei der die in einer gemeinsamen Ebene liegenden Messrohre unterschiedlich lang sind, wobei der Durchmesser des längeren Messrohrs zum Angleich der Rohrwiderstände größer ist als der Durchmesser des kürzeren Messrohrs. Der grundsätzlich im Vergleich zu dem etwas kürzeren Messrohr - bei gleichen sonstigen Parametern - durch die größere Länge gesteigerte Rohrwiderstand wird bei dem längeren Messrohr dadurch ausgeglichen, dass der Durchmesser geringfügig größer ist, so dass die Differenz des Rohrwiderstandes, also der Nachteil der größeren Länge nämlich durch den größeren Durchmesser wieder ausgeglichen wird. Die Wahl der Durchmesser der Messrohre im Rahmen der Konstruktion des Coriolis-Massedurchflussmessgeräts erfolgt vorzugsweise auch unter Berücksichtigung der Fluideigenschaften und unter Berücksichtigung der Betriebsparameter des jeweiligen Coriolis-Massedurchflussmessgeräts. Bei einem weiteren Beispiel, das nicht Teil der Erfindung ist, sind die in einer gemeinsamen Ebene liegenden Messrohre unterschiedlich lang sind, wobei die Innenfläche des kürzeren und/oder des längeren Messrohrs derart bezüglich ihrer Rauheit gewählt ist, dass der Rohrwiderstand der beiden Messrohre für eine Strömung identisch ist. Bei dieser Ausgestaltung - wie auch bei der vorangehend beschriebenen - ist folglich eines der beiden zu einem Messrohrpaar zusammengefassten Messrohre geringfügig länger als das andere Messrohr, so das ein Angleich des Rohrwiderstandes erforderlich ist. Zum Angleich des Rohrwiderstandes für eine Strömung wird die Oberflächenbeschaffenheit der etwas längeren Messrohre der Messrohrpaare derart gewählt, dass die Messrohre trotz der längeren Gesamtlänge einen gleich großen Strömungswiderstand wie die kürzeren Messrohre aufweisen. Dieses Beispiel eignet sich insbesondere für Coriolis-Massedurchflussmessgeräte, deren optimaler Betriebspunkt im Bereich einer laminaren Strömung liegt, da bei einer laminaren Strömung der Einfluss der Oberflächenrauheit auf den Rohrwiderstand besonders groß ist. Vorzugsweise wird sowohl der Durchmesser als auch die Oberflächenbeschaffenheit gleichzeitig als Variable für die etwas längeren Messrohre ausgewählt und angepasst, um den Rohrwiderstand für alle Messrohre abzugleichen.

Gemäß einer weiteren vorteilhaften Ausführungsform des Coriolis-Massedurchflussmessgeräts ist vorgesehen, dass Haltevorrichtungen zur Befestigung der Aktuator- und/oder der Sensoranordnungen an den Messrohren vorgesehen sind, wobei eine Haltevorrichtung im Montagezustand die in einer Ebene liegenden Messrohre miteinander verbindet, wobei insbesondere eine Haltevorrichtung ein Messrohr vollständig umschließen. Vorzugsweise liegen sogar die beiden Mittellinien der Messrohre, die mit einer Haltevorrichtung miteinander verbunden werden, in einer gemeinsamen Ebene. Die Haltevorrichtungen sind beispielsweise aus einer Blechplatte gefertigt, so dass im Montagezustand gewährleistet ist, dass die mit Haltevorrichtungen verbundenen Messrohre nicht relativ zueinander schwingen. Die Haltevorrichtungen weisen Bohrungen auf, mit der sie sich auf die beiden in einer Ebene liegenden Messrohre aufschieben lassen. Der Innendurchmesser einer Bohrung entspricht dazu dem Außendurchmesser eines Messrohres, wobei die Haltevorrichtungen an den Messrohren beispielsweise kraft-, stoff- oder formschlüssig befestigt werden. An einer Haltevorrichtung ist jeweils mindestens ein Teil einer Aktuator- und/oder Sensoranordnung befestigt, wobei eine vollständige Aktuator oder Sensoranordnung aus zwei gegenüberliegend angeordneten, jeweils an einer Haltevorrichtung befestigten Teilen besteht, die im Montagezustand zusammenwirken. Üblicherweise handelt es sich bei den zwei Teilen einer Aktuator- oder Sensoranordnung um einen Permanentmagneten und eine Magnetspule, in die der Permanentmagnet eintaucht. Die zwei Teile sind dabei entsprechend so angeordnet, dass die zwischen den zwei Messrohrpaaren wirken, die jeweils mit Haltevorrichtung zusammengefasst sind.

Eine besondere Stabilität der Haltevorrichtung, die relative Schwingungen zwischen den beiden mit einer Haltevorrichtung zusammengefassten Messrohre verhindert, lässt sich erzielen, wenn die Haltevorrichtungen gemäß einer weiteren Ausgestaltung derart ausgestaltet sind, dass die Haltevorrichtungen für die Aktuator- oder Sensoranordnungen symmetrisch ausgestaltet sind, insbesondere bezüglich mindestens zwei zueinander orthogonalen Ebenen symmetrisch ausgestaltet sind. Durch die Symmetrie erhält die Haltevorrichtung eine vorteilhafte Verwindungssteifigkeit, wodurch eine Relativbewegung der durch die Haltevorrichtung miteinander verbindenden Messrohre zuverlässig verhindert wird. Jede Haltevorrichtung an den Messrohren stellt im Betriebszustand eine zusätzliche Masse dar, die mit den Messrohren mitschwingt. Durch eine symmetrische Ausgestaltung der Haltevorrichtungen wird die Masse gleichmäßig verteilt, so dass keine Störschwingungen durch asymmetrisch schwingende Massen entstehen können. Die Symmetrie der Haltevorrichtung ist vorzugsweise bezüglich einer Ebene vorgesehen, die die beiden Mittellinien der miteinander verbundenen Messrohre enthält. Die zweite Symmetrieebene ist vorzugsweise eine Ebene, die orthogonal zu der ersten Ebene ist und die parallel zu den Mittellinien der Messrohre, exakt auf der Hälfte der Strecke zwischen den Mcssrohrmittellinien verläuft.

Insbesondere bei Fluiden innerhalb des Coriolis-Massedurchflussmessgeräts, die die Schwingungen der Messrohre stark dämpfen, hat es sich als vorteilhaft herausgestellt, wenn an einer Haltevorrichtung oberhalb und unterhalb der zwei mit der Haltevorrichtung verbundenen Messrohre ein Teil einer Aktuator- oder Sensoranordnung befestigt ist. Dadurch, dass oberhalb und unterhalb der Messrohre jeweils beispielsweise eine Aktuatoranordnung vorgesehen ist, steht eine größere Anregungsenergie zur Anregung der Schwingungen der Messrohre zur Verfügung, so dass insbesondere bei stark schwingungsabsorbierenden Randbedingungen eine ausreichende Schwingung zur Erfassung des Massedurchflusses angeregt werden kann. Ein weiterer Vorteil der doppelten Aktuatoranordnung besteht darin, dass die Messrohre vorteilhaft momentenfrei angeregt werden, so dass keine Torsionsstörschwingungen der Messrohrpaare angeregt werden, sondern beidseitig der Messrohre eine definierte Anregungskraft aufgebracht wird, die lediglich Schwingungen in einer bevorzugten Schwingungsebene anregt.

Für den Fall, dass oberhalb und unterhalb der mit einer Haltevorrichtung verbundenen Messrohre an der Haltevorrichtung oberhalb und unterhalb jeweils eine Teil einer Sensoranordnung vorgesehen ist und somit zwischen den Messrohrpaaren oberhalb und unterhalb der Messrohre eine Sensoranordnung vorgesehen ist, besteht der Vorteil, dass möglicherweise aufgeprägte oder vorhandene Torsionsschwingungen der Messrohrpaare zueinander durch eine Vergleichsauswertung der Messsignale der oberen und der unteren Sensoranordnung ausgewertet werden und die Messsignale somit von dieser Störschwingung bereinigt werden können.

Die Einkopplung von Störschwingungen, die von dem das Coriolis-Massedurchflussmessgerät umgebenden Rohrleitungssystem ausgehen, kann verhindert werden, indem einlaufseitig und auslaufseitig jeweils zwei voneinander beabstandete Knotenplatten vorgesehen sind, die alle vier Messrohre miteinander verbinden, insbesondere die Knotenplatten symmetrisch ausgestaltet sind. Die Knotenplatten sind jeweils im Endbereich der Messrohre fest mit allen vier Messrohren verbunden, so dass sich die Messrohre nicht relativ zueinander bewegen können. Zur weiteren Unterbindung der Ausbreitung von Störschwingungen ist in einem definierten Abstand zur ersten Knotenplatte eine zweite Knotenplatte vorgesehen, die ebenfalls alle vier Messrohre miteinander verbindet und an diesen befestigt ist. Neben dem Einkoppeln von Störschwingungen verhindern die Knotenplatten das Auskoppeln der von der Aktuatoranordnung erzeugten Schwingungen auf das das Coriolis-Massedurchflussmessgerät umgebende Rohrleitungssystem.

Die Messgenauigkeit des Coriolis-Massedurchflussmessgeräts lässt sich gemäß einer weiteren Ausgestaltung zusätzlich dadurch steigern, dass die einlaufseitig und auslaufseitig vorgesehenen Sammler derart stabil ausgestaltet sind, dass sie die Funktionalität einer Knotenplatte erfüllen. Die Messrohre, die in den Sammlern jeweils strömungstechnisch zusammengefasst werden, sind dazu fest mit dem Sammler verbunden, so dass der Sammler eine Bewegung der vier Messrohre relativ zueinander zuverlässig unterbindet und Schwingungen dämpfen.

Das Übertragen von Schwingungen auf das Gehäuse wird dadurch verhindert, dass innerhalb eines Gehäuses des Coriolis-Massedurchflussmessgeräts ein Versteifungselement vorgesehen ist, wobei das Versteifungselement einen bogenförmigen Verlauf aufweist, der entgegengesetzt zum bogenförmigen Verlauf der Messrohre ist. Die Messrohre sind vorzugsweise U- oder V-förmig gebogen und erstrecken sich innerhalb eines Gehäuses. Das Versteifungselement ist vorzugsweise auch U- oder V-förmig gestaltet, jedoch entgegengesetzt zu dem bogenförmigen Verlauf der Messrohre angeordnet und an den Wänden des Gehäuses befestigt. Durch das Versteifungselement kann das Coriolis-Massedurchflussmessgerät ferner wesentlich dünnwandiger und damit leichter Ausgestaltet sein, wobei eine ausreichende Stabilität durch das Versteifungselement gewährleistet wird. Das Versteifungselement ist vorzugsweise als massives Teil ausgestaltet oder besonders bevorzugt als geschweißte Hohlrahmenkonstruktion aufgebaut.

Die geschweißte Hohlrahmenkonstruktion hat beispielsweise ferner den Vorteil, dass wie gemäß einer weiteren Ausgestaltung innerhalb des Versteifungselements ein abgeschlossenes Volumen ausgebildet ist, wobei insbesondere innerhalb des Versteifungselements ein Wärmeträgermedium führbar ist. Durch das in dem Versteifungselement ausgebildete Volumen lässt sich ein Wärmeträgermedium führen, mit dem beispielsweise der Innenraum des Gehäuses des Coriolis-Massedurchflussmessgeräts heizbar oder kühlbar ist, was insbesondere bei temperaturempfindlichen Medien innerhalb der Messrohre erforderlich ist. Ein weiteres Anwendungsfeld ist beispielsweise das Heizen der Messrohre für Fluide, die ansonsten innerhalb der Messrohre nicht fließfähig wären oder sogar erstarrten. Das Wärmeträgermedium wird dazu auf einer Seite des Volumens in das Versteifungselement eingeleitet und - nachdem es Energie aufgenommen oder abgegeben hat - wieder aus dem Volumen zur Regeneration herausgeleitet. Durch die Versteifungskonstruktion werden somit gleichzeitig zwei Funktionalitäten erfüllt.

Im Einzelnen gibt es nun eine Vielzahl von Möglichkeiten, das Coriolis-Massedurchflussmessgerät auszugestalten und weiterzubilden. Dazu wird verwiesen sowohl auf die dem Patentanspruch 1 nachgeordneten Patentansprüche als auch auf die nachfolgende Beschreibung von bevorzugten Ausführungsbeispielen in Verbindung mit der Zeichnung. In der Zeichnung zeigen:
Fig. 1 ein Ausführungsbeispiel eines Coriolis-Massedurchflussmessgeräts in geschnittener Seitenansicht,
Fig. 2 die Messrohren eines Coriolis-Massedurchflussmessgeräts gemäß Fig. 1 in Seitenansicht,
Fig. 3 ein Beispiel der Messrohre eines Coriolis-Massedurchflussmessgeräts in Frontansicht, das nicht Teil der Erfindung ist, und
Fig. 4 ein Ausführungsbeispiel der Messrohre für ein Coriolis-Massedurchflussmessgerät mit beidseitig angeordneten Aktuator- oder Sensoranordnungen in geschnittener Darstellung.

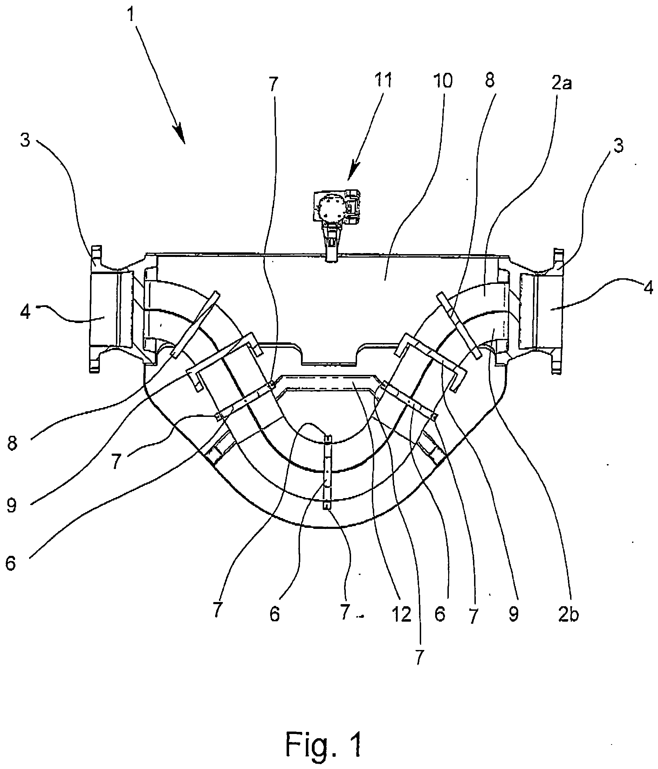

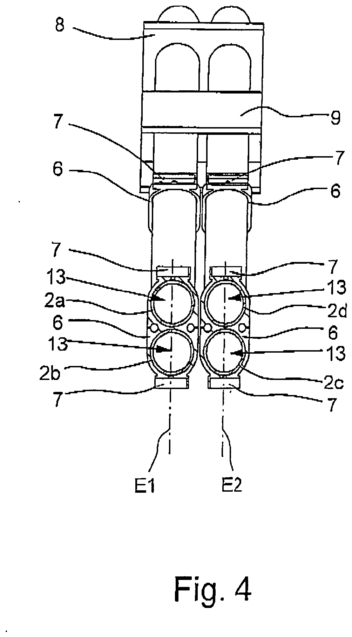

Fig. 1 zeigt ein Ausführungsbeispiel eines Coriolis-Massedurchflussmessgeräts 1 in geschnittener Seitenansicht. Innerhalb des Coriolis-Massedurchflussmessgeräts 1 sind insgesamt vier gebogene Messrohre 2a, 2b, 2c, 2d angeordnet. Wie Fig. 4 zeigt liegen ein erstes Messrohr 2a und ein zweites Messrohr 2b in einer gemeinsamen ersten Ebene E₁ und ein drittes Messrohr 2c und ein viertes Messrohr 2d in einer gemeinsamen zweiten Ebene E₂. Bei dem Ausführungsbeispiel gemäß Fig. 4 liegen sogar die Mittellinien der paarweise gebündelten Messrohre 2a, 2b bzw. 2c, 2d jeweils in den gemeinsamen Ebenen E₁, E₂. Die erste Ebene E₁ und die zweite Ebene E₂ sind parallel zueinander angeordnet.

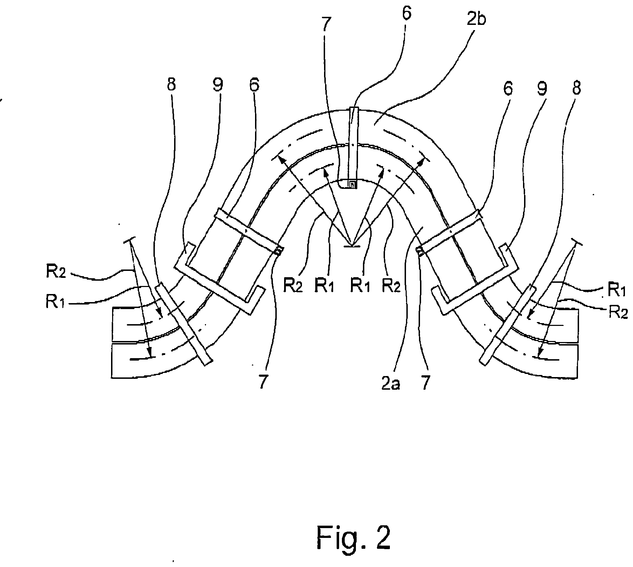

Wie Fig. 1 zeigt, sind alle vier Messrohre 2a, 2b, 2c, 2d einlaufseitig und auslaufseitig mit einem Sammler 3 strömungstechnisch zusammengefasst. Die Sammler 3 weisen eine Kammer 4 auf, in der jeweils die Öffnungen der vier Messrohre 2a, 2b, 2c, 2d münden. Bei dem Coriolis-Massedurchflussmessgerät gemäß Fig. 1 sind die Geometrie und die Oberflächeneigenschaften der vier Messrohre 2a, 2b, 2c, 2d so gewählt, dass der Rohrwiderstand aller vier Messrohre 2a, 2b, 2c, 2d für eine Strömung identisch ist. Insbesondere sind bei dem Coriolis-Massedurchflussmessgerät 1 gemäß Fig. 1 alle vier Messrohre 2a, 2b, 2c, 2d gleich lang, was dadurch erreicht wird, dass die - in Fig. 2 dargestellten - Biegeradien R₁, R₂ der vier Messrohre 2a, 2b, 2c, 2d sich derart wechselweise ergänzen, dass die Gesamtlänge aller vier Messrohre 2a, 2b, 2c, 2d identisch ist.

Fig. 2 zeigt die Messrohre 2a, 2b, 2c, 2d des Ausführungsbeispiels gemäß Fig. 1 in freigestellter Darstellung in Seitenansicht. Die Biegeradien R₁, R₂, die sich bei den Messrohren 2a, 2b und 2c, 2d jeweils in einer Ebene E₁, E₂, befinden, ergänzen sich bei diesem Ausführungsbeispiel wechselseitig. "Wechselseitig ergänzen" bedeutet in diesem Zusammenhang, dass jedes der vier Messrohre 2a, 2b, 2c, 2d im Verlauf zwischen den beiden - in Fig. 1 dargestellten - Sammlern 3 einen bogenförmigen Verlauf mit einer bestimmten Anzahl und definierten Strecken mit den Biegeradien R₁, R₂ überstreicht. So beginnt beispielsweise - in Fig. 2 von links nach rechts gesehen - das erste Messrohr 2a mit einem bogenförmigen Abschnitt mit dem Radius R₂, nachfolgend folgen zwei bogenförmige Abschnitte mit dem Radius R₁, und abschließend - auf der rechten Seite der Fig. 2 - ein bogenförmiger Verlauf mit dem Radius R₂. Das zweite Messrohr 2b beginnt - auf der linken Seite der Fig. 2 - mit einem bogenförmigen Abschnitt mit dem Radius R₁ nachfolgend mit zwei bogenförmigen Abschnitten mit dem Radius R₂ und schließt - auf der rechten Seite der Fig. 2 - mit einem bogenförmigen Abschnitt mit dem Radius R₁ ab. Beide Messrohre 2a, 2b überstreichen somit auf ihrer Strecke zwischen den beiden Sammlern 3 jeweils zwei bogenförmige Abschnitte mit dem Radius R₁ und jeweils zwei bogenförmige Abschnitte mit dem Radius R₂, wobei sich die Biegeradien R₁, R₂ derart wechselweise ergänzen, dass in einem Bereich wo das erste Messrohr 2a einen bogenförmigen Verlauf mit einem Radius R₂ hat, das zweite Messrohr 2b einen bogenförmigen Verlauf mit dem Radius R₁ hat - und umgekehrt, so dass insgesamt die Gesamtlänge beider Messrohren 2a, 2b identisch ist. Entsprechendes gilt für den Verlauf des dritten Messrohrs 2c mit dem vierten Messrohr 2d in der Ebene E₂.

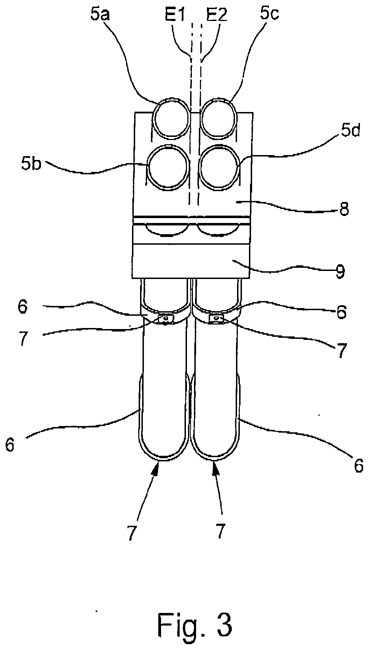

Fig. 3 zeigt ein Beispiel, das nicht Teil der Erfindung ist, von Messrohren 5a, 5b, 5c, 5d für ein Coriolis-Massedurchflussmessgerät 1. Gemäß Fig. 3 ist jeweils ein längeres Messrohr 5b, 5d mit einem kürzeren Messrohr 5a, 5c in einer gemeinsamen Ebene E₁, E₂ angeordnet. Das kürzere Messrohr 5a ist mit dem längeren Messrohr 5b in einer ersten Ebene E₁ angeordnet und das längere Messrohr 5d ist mit dem kürzeren Messrohr 5c in einer zweiten Ebene E₂ angeordnet. Zum Angleich der Rohrwiderstände aller vier Messrohre 5a, 5b, 5c, 5d ist der Durchmesser der längeren Messrohre 5b, 5d größer als der Durchmesser der kürzeren Messrohre 5a, 5c. Bei allen vier Messrohren 5a, 5b, 5c, 5d ist zusätzlich zu den Durchmessern der Messrohre 5a, 5b, 5c, 5d auch die Innenfläche der Messrohre 5a, 5b, 5c, 5d bezüglich ihrer Rauheit so gewählt, dass der Rohrwiderstand aller Messrohre 5a, 5b, 5c, 5d für eine Strömung identisch ist. Die Einstellung eines gleichen Rohrwiderstands für eine Strömung für alle Messrohre 5a, 5b, 5c, 5d ist bei diesem Beispiel ein komplexes Zusammenspiel der beiden Parameter Rauheit der Innenfläche und dem Durchmesser der Messrohre. Zur Befestigung von - nicht dargestellten - Aktuator und/oder Sensoranordnung sind an den Messrohren 5a, 5b, 5c, 5d Haltevorrichtungen 6 vorgesehen, die die in einer Ebene E₁, E₂ liegenden Messrohre miteinander verbinden. An den schmalen Stirnseiten 7 einer Haltevorrichtung 6 ist jeweils ein Teil einer Aktuator- oder Sensoranordnung befestigbar. In den einlaufseitigen und auslaufseitigen Endbereichen sind alle vier Messrohre 5a, 5b, 5c, 5d jeweils mit einer ersten Knotenplatte 8 und mit einer zweiten Knotenplatte 9 miteinander verbunden, um insbesondere zu verhindern, dass die Schwingungen der Messrohre 5a, 5b, 5c, 5d des Coriolis-Massedurchflussmessgeräts 1 auf das das Coriolis-Massedurchflussmessgerät 1 umgebende - nicht dargestellte - Rohrleitungssystem zu verhindem. Gemäß Fig. 2 ist die erste Knotenplatte 8 als gerades Blechstück ausgestaltet, während die zweite Knotenplatte 9 winkelförmige Erweiterungen in ihren Seitenbereichen aufweist.

Gemäß Fig. 1 sind die Messrohre 2a, 2b, 2c, 2d innerhalb eines Gehäuses 10 des Coriolis-Massedurchflussmessgeräts 1 angeordnet. An dem Gehäuse ist auch eine - nicht weiter beschriebene - Mess- und Auswerteelektronik 11 angeordnet. Das Gehäuse ist an den Sammlern 3 befestigt und umgibt die Messrohre 2a, 2b, 2c, 2d vollständig. Um die Steifigkeit des Gehäuses 10 zu erhöhen, ist ein Versteifungselement 12 vorgesehen, das einen bogenförmigen Verlauf aufweist, der entgegengesetzt zum bogenförmigen Verlauf der Messrohre 2a, 2b, 2c, 2d ist. Das Versteifungselement 12 dient dazu, ein Mitschwingen des Gehäuses 10 zu verhindern und um gleichzeitig die Materialstärke der Wandungen des Gehäuses 10 reduzieren zu können. Das Versteifungselement 12 ist als geschweißte Hohlrahmenkonstruktion ausgestaltet, so dass innerhalb des Versteifungselements 12 ein abgeschlossenes Volumen ausgebildet ist, in dem ein Wärmeträgermedium führbar ist. Dadurch kann das Innenvolumen des Gehäuses 10 und insbesondere die Messrohre 2a, 2b, 2c, 2d beispielsweise gekühlt oder geheizt werden.

Gemäß dem Ausführungsbeispiel in Fig. 1 sind an den Haltevorrichtungen 6 jeweils beidseitig an den Stirnseiten 7 Teile einer Aktuator- bzw. Sensoranordnung befestigbar. Die Anordnung von Teilen einer Aktuator- bzw. Sensoranordnung auf beiden Seiten der Messrohre 2a, 2b, 2c, 2d hat den Vorteil, dass die Messrohre 2a, 2b, 2c, 2d mit einer hohen Anregungsenergie gleichmäßig angeregt werden können, wobei mit den beidseitig angeordneten Sensoranordnungen eine Kompensation von möglicherweise entstehenden Torsionsschwingungen möglich ist.

In Fig. 4 ist eine Schnittdarstellung durch die Haltevorrichtungen 6 für die - nicht dargestellten - Aktuatoranordnungen dargestellt. Auf beiden Stirnseiten 7 der Haltevorrichtungen 6 ist ein Teil einer Aktuatoranordnung befestigbar, so dass jeweils zwei Teile einer Aktuatoranordnung an zwei Haltevorrichtungen 6 im Betriebszustand miteinander wechselwirken können. Die Haltevorrichtungen 6 sind als massive Blechteile und bezüglich zwei zueinander orthogonalen Ebenen symmetrisch ausgestaltet. Eine Symmetrie der Haltevorrichtungen 6 liegt beispielsweise jeweils zu den beiden Ebenen E₁ und E₂ vor sätzlich zu einer weiteren Ebene, die orthogonal zu den Ebenen E₁ und E₂, exakt in der Mitte zwischen den Bohrungen 13 der Haltevorrichtungen 6 verläuft. Die Haltevorrichtungen 6 sind derart stabil ausgestaltet, dass ein relatives Schwingen der in einer gemeinsamen Ebene E₁, E₂ angeordneten Messrohre 2a, 2b oder 2c, 2d nicht möglich ist.

## Patentansprüche

1. Coriolis-Massedurchflussmessgerät (1) mit mindestens vier gebogenen Messrohren (2a, 2b, 2c, 2d), mindestens einer Aktuatoranordnung, und mindestens einer Sensoranordnung, wobei ein erstes Messrohr (2a) und ein zweites Messrohr (2b) in einer gemeinsamen ersten Ebene (E₁) und ein drittes Messrohr (2c) und ein viertes Messrohr (2d) in einer gemeinsamen zweiten Ebene (E₂) liegen, wobei die erste Ebene (E₁) und die zweite Ebene (E₂) parallel zueinander verlaufen, wobei die Messrohre, die in einer gemeinsamen Ebene liegen, übereinander angeordnet sind, wobei alle vier Messrohre (2a, 2b, 2c, 2d) einlaufseitig und auslaufseitig mit einem Sammler (3) strömungstechnisch zusammengefasst sind, und wobei die Geometrie und/oder die Oberflächeneigenschaften der Messrohre (2a, 2b, 2c, 2d) so gewählt sind, dass der Rohrwiderstand aller vier Messrohre (2a, 2b, 2c, 2d) für eine Strömung identisch ist,
**dadurch gekennzeichnet,**
**dass** die Biegeradien (R₁, R₂) der in einer gemeinsamen Ebene (E₁, E₂) liegenden Messrohre (2a, 2b; 2c, 2d) so gewählt sind, dass sich die Biegeradien (R₁, R₂) wechselweise ergänzen, so dass die Länge der Messrohre (2a, 2b, 2c, 2d) identisch ist, dass das erste Messrohr (2a) und das vierte Messrohr (2d) mit einem bogenförmigen Abschnitt mit dem Radius (R₂) beginnen, nachfolgend folgen zwei bogenförmige Abschnitte mit dem Radius (R₁) und abschließend ein bogenförmiger Verlauf mit dem Radius (R₂), und dass das zweite Messrohr (2b) und das dritte Messrohr (2c) mit einem bogenförmigen Abschnitt mit dem Radius (R₁) beginnen, nachfolgend folgen zwei bogenförmigen Abschnitte mit dem Radius (R₂) und abschließend ein bogenförmiger Abschnitt mit dem Radius (R₁).

2. Coriolis-Massedurchflussmessgerät (1) nach Anspruch 1, **dadurch gekennzeichnet, dass** Haltevorrichtungen (6) zur Befestigung der Aktuator-und/oder der Sensoranordnungen an den Messrohren (2a, 2b, 2c, 2d) vorgesehen sind, wobei eine Haltevorrichtung (6) im Montagezustand die in einer Ebene (E₁, E₂) liegenden Messrohre (2a, 2b; 2c, 2d) miteinander verbindet.

3. Coriolis-Massedurchflussmessgerät (1) nach Anspruch 1 oder 2, **dadurch gekennzeichnet, dass** die Haltevorrichtungen (6) für die Aktuator- oder Sensoranordnungen symmetrisch ausgestaltet sind, insbesondere bezüglich mindestens zwei zueinander orthogonalen Ebenen symmetrisch ausgestaltet sind.

4. Coriolis-Massedurchflussmessgerät (1) nach Anspruch 2 oder 3, **dadurch gekennzeichnet, dass** an einer Haltevorrichtung (6) oberhalb und unterhalb der zwei mit der Haltevorrichtung (6) verbundenen Messrohre (2a, 2b; 2c, 2d) ein Teil einer Aktuator- oder Sensoranordnung befestigt ist.

5. Coriolis-Massedurchflussmessgerät (1) nach einem der Ansprüche 1 bis 4, **dadurch gekennzeichnet, dass** einlaufseitig und auslaufseitig jeweils zwei voneinander beabstandete Knotenplatten (8, 9) vorgesehen sind, die alle vier Messrohre (2a, 2b, 2c, 2d) miteinander verbinden, insbesondere die Knotenplatten (8, 9) symmetrisch ausgestaltet sind.

6. Coriolis-Massedurchflussmessgerät (1) nach einem der Ansprüche 1 bis 5, **dadurch gekennzeichnet, dass** die einlaufseitig und auslaufseitig vorgesehenen Sammler (3) derart stabil ausgestaltet sind, dass sie die Funktionalität einer Knotenplatte erfüllen.

7. Coriolis-Massedurchflussmessgerät (1) nach einem der Ansprüche 1 bis 6, dadurch gekennzeichet dass innerhalb eines Gehäuses (10) des Coriolis-Massedurchflussmessgeräts (1) ein Versteifungselement (12) vorgesehen ist, wobei das Versteifungselement (12) einen bogenförmigen Verlauf aufweist, der entgegengesetzt zum bogenförmigen Verlauf der Messrohre (2a, 2b, 2c, 2d) ist.

8. Coriolis-Massedurchflussmessgerät (1) nach Anspruch 7, **dadurch gekennzeichnet, dass** innerhalb des Versteifungselements (12) ein abgeschlossenes Volumen ausgebildet ist, wobei insbesondere innerhalb des Versteifungselements (12) ein Wärmeträgermedium führbar ist.

## Claims

1. Coriolis mass flowmeter (1) with at least four bent measuring tubes (2a, 2b, 2c, 2d), at least one actuator assembly and at least one sensor assembly, wherein a first measuring tube (2a) and a second measuring tube (2b) are located in a common first plane (E₁), and a third measuring tube (2c) and a fourth measuring tube (2d) are located in a common second plane (E₂) wherein the first plane (E1) and the second plane (E2) run parallel to one another, wherein the measuring tubes located in a common plane are arranged over one another, wherein a collector (3) joins all four measuring tubes (2a, 2b, 2c, 2d) together in terms of flow at an input end and at an output end, and wherein the geometry and/or the surface characteristics of the measuring tubes (2a, 2b, 2c, 2d) have been set in such a manner that the tube flow resistance of all four measuring tubes (2a, 2b, 2c, 2d) is identical,
**characterized in**
**that** the bending radii (R₁, R₂) of the measuring tubes (2a, 2b; 2c, 2d) located in each of the common planes (E₁, E₂) alternately complement one another so that the length of the measuring tubes (2a, 2b, 2c, 2d) is identical, that the first measuring tube (2a) and the fourth measuring tube (2d) begin with an arch-shaped portion with the radius (R₂), then two arch-shaped portions with the radius (R₁) follow and finally there is an arch shape with the radius (R₂), and that the second measuring tube (2b) and the third measuring tube (2c) begin with an arch-shaped portion with the radius (R₁), then two arch-shaped portions with the radius (R₂) follow and finally there is an arch-shaped portion with the radius (R₁).

2. Coriolis mass flowmeter (1) according to claim 1, **characterized in that** holding devices (6) are provided for affixing the actuator assembly and/or the sensor assembly to the measuring tubes (2a, 2b, 2c, 2d), wherein the holding devices (6) join the measuring tubes (2a, 2b; 2c, 2d) located in each plane (E₁, E₂) to one another.

3. Coriolis mass flowmeter (1) according to claim 1 or 2, **characterized in that** the holding devices (6) for the actuator or sensor assemblies are symmetrical, especially in respect to at least two planes that are orthogonal to one another.

4. Coriolis mass flowmeter (1) according to claim 2 or 3, **characterized in that** a part of the actuator assembly or sensor assembly is attached to a holding device (6) above and below the two measuring tubes (2a, 2b; 2c, 2d) joined by the holding device (6).

5. Coriolis mass flowmeter (1) according to any one of claims 1 to 4, **characterized in that** two node plates (8, 9) are provided spaced apart from one another on the input side and the output side, joining all four measuring tubes (2a, 2b, 2c, 2d) together, in particular the node plates (8, 9) are symmetrically designed.

6. Coriolis mass flowmeter (1) according to any one of claims 1 to 5, **characterized in that** the collectors (3) provided on the input side and the output side are designed stably so that they perform the function of a node plate.

7. Coriolis mass flowmeter (1) according to any one of claims 1 to 6, **characterized in that** a reinforcing element (12) is located within a housing (10) of the Coriolis mass flowmeter (1), wherein the reinforcing element (12) has an arch-shape which runs opposite to an arch-shaped portion of the measuring tubes (2a, 2b, 2c, 2d).

8. Coriolis mass flowmeter (1) according to claim 7, **characterized in that** a closed volume is formed inside of the reinforcing element (12), wherein a heat transfer medium can be circulated within the reinforcing element (12).

## Revendications

1. Débitmètre massique Coriolis (1) avec au moins quatre tubes de mesure courbes (2a, 2b, 2c, 2d), au moins un dispositif d'actionneur et au moins un dispositif de capteur, dans lequel un premier tube de mesure (2a) et un deuxième tube de mesure (2b) sont situés dans un premier plan commun (E₁) et un troisième tube de mesure (2c) et un quatrième tube de mesure (2d) sont situés dans un deuxième plan commun (E₂), dans lequel le premier plan (E₁) et le deuxième plan (E₂) sont parallèles l'un à l'autre, dans lequel les tubes de mesure qui sont situés dans un plan commun sont disposés l'un au-dessus de l'autre, dans lequel les quatre tubes de mesure (2a, 2b, 2c, 2d) sont tous réunis selon la technique d'écoulement, à l'entrée et à la sortie, par un collecteur (3), et dans lequel la géométrie et les propriétés de surface des tubes de mesure (2a, 2b, 2c, 2d) sont choisies de telle manière que la résistance du tube à l'écoulement des quatre tubes de mesure (2a, 2b, 2c, 2d) soit identique, **caractérisé en ce que** les rayons de courbure (R₁, R₂) des tubes de mesure (2a, 2b; 2c, 2d) situés dans un plan commun (E₁, E₂) sont choisis de telle manière que les rayons de courbure (R₁, R₂) se complètent alternativement, de telle manière que la longueur des tubes de mesure (2a, 2b, 2c, 2d) soit identique, **en ce que** le premier tube de mesure (2a) et le quatrième tube de mesure (2d) commencent avec une partie courbe de rayon (R₂), se poursuivent avec deux parties courbes de rayon (R₁) et se terminent avec une partie courbe de rayon (R₂), et **en ce que** le deuxième tube de mesure (2b) et le troisième tube de mesure (2c) commencent avec une partie courbe de rayon (R₁), se poursuivent avec deux parties courbes de rayon (R₂) et se terminent avec une partie courbe de rayon (R₁).

2. Débitmètre massique Coriolis (1) selon la revendication 1, **caractérisé en ce qu'**il est prévu des dispositifs de maintien (6) pour la fixation des dispositifs d'actionnement et/ou de capteur sur les tubes de mesure (2a, 2b, 2c, 2d), dans lequel un dispositif de maintien (6) relie l'un à l'autre à l'état monté les tubes de mesure (2a, 2b; 2c, 2d) situés dans un plan (E₁, E₂).

3. Débitmètre massique Coriolis (1) selon la revendication 1 ou 2, **caractérisé en ce que** les dispositifs de maintien (6) pour les dispositifs d'actionnement ou de capteur sont de forme symétrique, en particulier sont de forme symétrique par rapport à au moins deux plans orthogonaux l'un à l'autre.

4. Débitmètre massique Coriolis (1) selon la revendication 2 ou 3, **caractérisé en ce qu'**une partie du dispositif d'actionnement ou de capteur est fixée à un dispositif de maintien (6) au-dessus et en dessous des deux tubes de mesure (2a, 2b; 2c, 2d) reliés avec le dispositif de maintien (6).

5. Débitmètre massique Coriolis (1) selon l'une quelconque des revendications 1 à 4, **caractérisé en ce qu'**il est prévu à l'entrée et à la sortie chaque fois deux plaques de noeud (8, 9) espacées l'une de l'autre, qui relient les uns aux autres les quatre tubes de mesure (2a, 2b, 2c, 2d), en particulier les plaques de noeud (8, 9) sont de forme symétrique.

6. Débitmètre massique Coriolis (1) selon l'une quelconque des revendications 1 à 5, **caractérisé en ce que** les collecteurs (3) prévus à l'entrée et à la sortie sont de forme stable, de telle manière qu'ils remplissent la fonctionnalité de plaques de noeud.

7. Débitmètre massique Coriolis (1) selon l'une quelconque des revendications 1 à 6, **caractérisé en ce qu'**il est prévu un élément de raidissement (12) à l'intérieur d'un boîtier du débitmètre massique Coriolis (1), dans lequel l'élément de raidissement (12) présente un tracé courbe, qui est opposé au tracé courbe des tubes de mesure (2a, 2b, 2c, 2d).

8. Débitmètre massique Coriolis (1) selon la revendication 7, **caractérisé en ce qu'**un volume fermé est formé à l'intérieur de l'élément de raidissement (12), dans lequel en particulier un milieu caloporteur peut être conduit à l'intérieur de l'élément de raidissement (12).
